# EUROPEAN PATENT APPLICATION

(11) **EP 4 625 599 A1**
(43) Date of publication of application: **01.10.2025**
(21) Application number: 24165828.5
(22) Date of filing: 25.03.2024
(51) Int. Cl.: H01M 10/42

(54) **MODULAR TEST SYSTEM FOR BATTERY CELLS AND CORRESPONDING TEST METHOD**

(71) Applicant: Crino GmbH, 80807 München (DE)
(72) Inventor: Zilberman, Ilya, Dr., 81541 Munich (DE); Noel, Andreas, 81373 Munich (DE)
(74) Representative: Meissner Bolte Partnerschaft mbB

(57) **Abstract**

The present invention pertains to a modular test system for a battery cell 1, preferably a cylindrical battery cell 1, further preferably a cylindrical lithium-ion battery cell 1, the test system being configured to be assembled from a plurality of modules to accommodate and at least partially enclose the battery cell 1, the modular test system comprising at least one calorimeter module 3 having a calorimeter thermal contact surface 31 for establishing a thermal contact to a part of a surface of the battery cell 1 when accommodated in the modular test system; a temperature control unit 33 for directly or indirectly controlling the temperature of the thermal contact surface 31, in order to apply a heating or cooling profile to the battery cell 1; and a heat flux sensor unit 32 for measuring a heat flux between the battery cell 1 and the calorimeter module 3. The invention further pertains to a test method for a battery cell 1.

## Description

The present invention relates to a modular test system according to the subject-matter of claim 1 and a test method according to the subject-matter of claim 15.

The electrification of vehicles has become a dominant trend in the automobile industry. Driven by policy shifts in countries targeting bans on gasoline and diesel vehicles and continued growing consumer demand for more sustainable vehicles, car manufactures are striving to electrify their vehicle portfolio. Classical gasoline drives are replaced by electric powertrains, which are powered by battery cells. In order to achieve sufficiently high energy output and battery capacity, a plurality of battery cells is assembled into cell assemblies like battery modules or battery packs.

An important aspect in the design of battery modules or packs from individual cells is heat management. Since charging and discharging of battery cells is accompanied by heat evolution in the cells, information on the heating temperature evolution and distribution within battery cells during use, and the heat transfer between cells in a battery module or pack during use is very important for safety reasons.

Calorimetry can be used to measure the thermal properties of a battery cell. These are for example thermal conductivity and thermal capacity, which are dependent on the temperature and the stage of charge of the battery cell. Moreover, the battery cell is also generating heat during the charging and discharging process . Quantitative data on heat generation is needed for optimum safety and performance under every condition. The thermal properties and the heat generation data from battery calorimetry is required for battery thermal modelling and the design of proper thermal management systems.

Thus, in order to ensure high reliability and optimize performance of cell assemblies, there is a need for robust and precise test systems capable of evaluating the properties of battery cells. As explained before, of particular interest is the temperature evolution of a battery cell in operation. Since the battery cells in a cell assembly have other battery cells in their vicinity which may vary in temperature and emit heat, tests of individual battery cells in an isolated environment may not accurately reflect the conditions experienced in a real cell assembly and therefore be of limited significance for a real-world application.

It is thus desirable to be able to test battery cells - particularly their calorimetric properties - in a controlled and well-reproducible environment that is at the same time suitable to reproduce the conditions the battery cell experiences in a real cell assembly as closely as possible. In this context, it is to be noted that at present, cylindrical battery cells experience increased popularity, as evidenced, e.g., by the 21700 and 46xx battery cells employed in recent electric vehicles. It is therefore desirable that the test environment is suitable to accurately assess the performance of cylindrical battery cells.

In light of the above, it is an object of the present invention to provide a test environment for battery cells, particularly for cylindrical battery cells, that provides reproducible and stable test conditions. Preferably, it should be designed to fulfil the following tasks:
- Measurement of thermal properties of a battery cell such as thermal conductivity and thermal capacity.
- Heat generation of battery cell under various conditions (temperature of environment, charging and discharging rates)
- Analysis of battery temperatures under load (charging and discharging) in adiabatic or other defined thermal environments.
- Enabling a realistic simulation of a cell assembly environment, which is easily modifiable to mimic different environments for the battery cell under investigation, such as the cooling interface, the charging and discharging profiles and the heat generated by adjacent battery cells.

This object is solved by a modular test system for a battery cell according to the subject-matter of claim 1 and a test method for a battery cell according to the subject-matter of claim 15. Preferred embodiments of the invention are defined by the subject-matter of the dependent claims.

In particular, the object is achieved by a modular test system for a battery cell, preferably a cylindrical battery cell, further preferably a cylindrical lithium-ion battery cell, the test system being configured to be assembled from a plurality of modules to accommodate and at least partially enclose the battery cell, the modular test system comprising at least one calorimeter module having a calorimeter thermal contact surface for establishing a thermal contact to a part of a surface of the battery cell when accommodated in the modular test system; a temperature control unit for directly or indirectly controlling the temperature of the calorimeter thermal contact surface, in order to apply a heating or cooling profile to the battery cell; and a heat flux sensor unit for measuring a heat flux between the battery cell and the calorimeter module.

An important aspect of the present invention is the modular configuration of the test system. The test system is assembled from a plurality of modules. This enables the user to freely model a variety of environments for the battery cell under investigation. The modular test system can be adapted to a desired configuration by a simple exchange of the used modules. The modules are configured such that the battery cell under investigation is accommodated and at least partially enclosed by the modules.

In order to enable a controlled testing on the battery cell under investigation, the test system comprises at least one calorimeter module which is configured to perform calorimetric tests. The calorimetric module comprises a calorimeter thermal contact surface, which is designed to establish a thermal contact to a part of the battery cell accommodated in the modular test system.

It is particularly preferred that the shape of the thermal contact surface is configured to correspond to the shape of the battery cell to be accommodated in the test system, in order to ensure a good thermal contact over substantially the entire thermal contact surface of the test system module. As will be elaborated in further detail below, in the case of cylindrical battery cells, it is preferred that the thermal contact surface has a curved shape which corresponds to the shape of the lateral surface of the cylindrical battery cell to be tested.

The calorimeter module further comprises a temperature control unit and a heat flux sensor unit. The temperature control unit is configured to control the temperature of the thermal contact surface. This allows the application of a heating or cooling profile to the battery cell under investigation, in order to perform calorimetric measurements under controlled conditions. The heat flux sensor unit is configured to measure a heat flux between the battery cell and the calorimeter module. This time-dependent measurement represents the result of the calorimetric measurements.

According to a preferred embodiment, the modular test system comprises at least one passive heat conduction module having a passive thermal contact surface for establishing a thermal contact to a part of a surface of the battery cell when accommodated in the modular test system, and a passive heat conduction element with a predetermined thermal resistance and/or heat capacity for conducting heat from and/or to the battery cell during testing.

The use of passive heat conduction modules enables the simulation of a thermally passive environment of the battery cell under investigation. The thermal properties of the passive heat conduction module can be adjusted by selection of a desired thermal resistance and/or heat capacity, to mimic a desired environment.

Since the test system comprises a plurality of modules, different thermal environments can be mimicked by choice of the desired modules. In order to allow the measurement of heat profiles, the inventive test system comprises at least one calorimeter module, but it is also possible to include more than one calorimeter module, in order to measure heat profiles with a spatial resolution, or to be able to simulate active elements in the vicinity of the tested battery cell.

In order to allow measuring the heat capacity, it is preferable to apply a temperature ramp to the cell surface. This can be achieved with any number of (active) calorimeter modules. The heat flux through at least one, preferably through all (active), thermal contact surfaces is then recorded. The sum of all heat fluxes is indicative of the heat capacity. By applying this method to two different references made from materials with known thermal capacities, a linear calibration function can be derived.

The thermal conductivity through a segment of the battery cell can be measured by applying a temperature gradient across the segment using at least two (active) calorimeter modules. The mean values of the heat flux measurements from the (active) calorimeter modules then serve as a measure of the thermal conductivity of the battery cell segment. By applying the same procedure to at least two different references made from materials with known thermal conductivity, a calibration function can be derived.

The at least one passive heat conduction module comprises a passive thermal contact surface, which is configured essentially in the same manner as the calorimeter thermal contact surface described above. In particular, its shape is chosen to correspond to the shape of a surface segment of the battery cell to be tested, so that a tight fit between the tested battery cell and the passive heat conduction module can be established via the passive thermal contact surface.

In this disclosure, calorimeter modules are also referred to as active modules due to their ability to actively control the temperature of their thermal contact surface. The passive heat conduction modules may also be referred to as passive modules. Calorimeter/active modules and passive (heat conduction) modules are jointly referred to as modules or test modules, if no distinction is necessary. When describing properties of elements common to both module types the respective elements will be denoted without an attribute designating the corresponding module type. That is, when describing, for example, properties common to the calorimeter thermal contact surface and the passive thermal contact surface, reference will be made to the thermal contact surface, without distinguishing between calorimeter and passive module type.

It is noted that the passive (heat conduction) modules may also comprise a heat flux sensor configured in an analogous manner to that of the calorimeter modules.

According to a preferred embodiment, the at least one calorimeter thermal contact surface and/or the at least one passive thermal contact surface are curved and shaped to correspond to a segment of the lateral face of a cylinder with a diameter corresponding to that of the battery cell to be accommodated in the modular test system.

As noted previously, cylindrical battery cells are increasingly popular in the design of battery modules and packs. Cylindrical battery cells have a top and bottom face (corresponding to the top base and the bottom base of the cylinder formed by the battery), at least one of which usually comprises the electric terminals of the cell. Connecting the top and bottom face, the battery cell has a lateral face that extends over the entire height and around the entire circumference of the battery cell. The lateral face of a cylinder with height h and radius r has an area of 2nrh. The cylindrical battery cell is rotationally symmetric with respect to its longitudinal axis, which extends through the center of the top base and the bottom base.

Battery modules/packs assembled from cylindrical battery cells usually arrange the battery cells such that their longitudinal axes are parallel, and adjacent battery cells face each other via their lateral faces. In order to mimic such an environment, the test system should reproduce heat exchange via the lateral face of a tested battery cell. Therefore, it is preferable that the thermal contact surface of the modules is curved. More particularly, the (calorimeter and/or passive) thermal contact surface is shaped as segment of a cylindrical lateral face with a curvature that corresponds to the curvature of the battery cell to be accommodated. Thus, the modules are configured to hold the cylindrical battery cell under investigation along its lateral face. A thermal contact between the test system and the battery cell is established along the lateral face of the battery cell, to mimic the thermal environment of the battery cell in a battery pack/module, with the top and bottom faces being free for electrical connection to the electric terminals of the battery cell.

Preferably, the height of the (calorimeter and/or passive) thermal contact surface, i.e. the dimension of the thermal contact surface perpendicular to the direction having the cylindrical curvature is at least 60%, further preferably at least 70%, further preferably at least 80%, further preferably at least 90% of the height of the battery cell. This ensures that a sufficiently large fraction of the lateral face of the battery cell under investigation is in thermal contact to the test system. Alternatively, the size of the (calorimeter and/or passive) thermal contact surface can be set in relation to the cooling surface of the battery cell, i.e., be chosen to be at least 60%, further preferably at least 70%, further preferably at least 80%, further preferably at least 90% of a dimension of the cooling surface of the battery cell.

Preferably, the modules are configured such that the plurality of thermal contact surfaces is configured to provide an overall contact surface for the battery cell that extends essentially along the entire circumference of the battery cell.

Preferably, the modular test system comprises, more preferably consists of, 2, 4 or 6 modules to enable the simulation of a linear, square or hexagonal arrangement of battery cells. This enables the simulation of a battery cell environment typically found in battery packs/modules assembled of cylindrical battery cells.

It is further preferred that the at least one calorimeter module comprises a temperature sensor arranged in or on the calorimeter thermal contact surface and configured to measure a temperature of the part of the surface of the battery cell in contact with the calorimeter thermal contact surface when accommodated in the modular test system. This improves the accuracy of the test system and the significance of the test results, since the surface temperature of the battery cell during a measurement cycle is an important parameter - particularly from a safety point of view since it should be ensured that the temperature of the battery cell does not exceed certain thresholds.

Further preferably, the at least one passive heat conduction module comprises a temperature sensor arranged in or on the passive thermal contact surface and configured to measure a temperature of the part of the surface of the battery cell in contact with the passive thermal contact surface when accommodated in the modular test system. The advantages of providing temperature sensors in the passive modules corresponds to that of temperature sensors in the active modules-the temperature profile of the battery cell under investigation can be determined with higher accuracy. Moreover, in case of passive and active modules in the modular test system, the resulting temperature distribution within the battery cell due to the active cooling or heating by the active module(s) can be observed.

Preferably, the at least one temperature control unit comprises a Peltier element. Peltier elements are a cost-effective and space-saving means to set the surface temperature of the battery cell and/or the thermal contact surface of the module with high accuracy.

It is further preferred that the at least one heat flux sensor unit comprises a Peltier element or two temperature sensors arranged at a predetermined distance from each other. This enables a highly precise measurement of the heat flux between the battery cell under investigation and the calorimeter module.

According to a further preferred embodiment, the at least one calorimeter module comprises a control unit configured to control the temperature control unit, to monitor heat flux data provided by the heat flux sensor unit, and optionally to monitor temperature data provided by the temperature sensor. This improves the operability of the test system. The electronics required to operate the test system are integrated into the active module, so that it is not necessary to provide additional control entities for the operation of the test system. Preferably, the at least one calorimeter module comprises an interface for connection with a user interface. Preferably, the interface is configured as LAN interface. This allows the connection of the test system to a computer, which serves as user interface to operate the test system.

Preferably, the modular test system comprises at least two calorimeter modules, wherein each calorimeter module is configured to operate independently or in synchronization with the other calorimeter module or modules. On the one hand, this enables more detailed measurements with the test system, because the heat evolution of the battery cell on different sides of the battery cell can be traced. On the other hand, the environment of the battery cell within a battery pack/module can be mimicked more precisely, since the temperature control unit of each calorimeter module can be used to simulate the presence of an active heat-emitting element such as an adjacent battery cell.

It is further preferred that the at least one temperature control unit is configured to operate in an adiabatic mode such that the battery cell is thermally insulated from the environment; or that the at least one thermal control unit is configured to operate in an isothermal mode such that the battery cell is kept at a constant temperature. Both modes provide important information on the battery cell under investigation.

In adiabatic mode, the heat flow of the battery cell under investigation can be determined in a simple manner. The amount of heat emitted during operation of the tested battery cell can be determined directly as a temperature change of the test object with the corresponding temperature sensors of the modules.

In isothermal mode, the calorimeter module can be operated both as a heat sink and as a heat source. This allows, for example the determination of the heat flow emitted by the battery cell under investigation during a charging or discharging process. This allows the development of a cooling system for the battery cell in a battery pack.

Preferably, the modular test system comprises a frame for mounting the modules such that the respective thermal contact surfaces form an enclosure for the battery cell, the modular test system optionally comprising a closing cap for closing off the enclosure for the battery cell at an axial end thereof, and/or electric connectors for connecting to the electric terminals of the battery cell. This mechanical configuration is particularly preferred if the test system is designed for the operation with cylindrical battery cells. The frame allows a quick dis- and re-mounting of modules without manipulation of other modules in the test system. The closing cap ensures a mechanically stable accommodation of the battery cell under investigation, and can also be employed to thermally insulate one of the end faces of the battery cell. At least one base face of the battery cell carrying electrical terminals can be connected via electrical connectors of the test system.

It is further preferred that the modular test system comprises a user interface for inputting heating and cooling profiles, and for monitoring experimental data, preferably in real time. As noted earlier, the test system may, for example, comprise a LAN interface for connecting the test system to a user interface. Alternatively, the test system itself comprises a user interface for direct interaction with the user.

According to a further preferred embodiment, the modular test system comprises a data acquisition unit operatively connectable to the at least one calorimeter module and/or optionally to the temperature sensor of the at least one passive heat conduction module, the data acquisition unit being configured to collect temperature and heat flux data from at least one temperature sensor and/or at least one heat flux sensor unit to determine at least one heat distribution profile of the surface of the battery cell. The data acquisition unit may be integral with the test system, preferably being contained in at least one of the active modules. Alternatively, data collection may be performed externally. In this case, the test system, preferably at least one of the active modules, comprises a corresponding data transfer interface such as a USB or LAN interface.

The object of the present invention is further achieved by a test method for a battery cell, preferably a cylindrical battery cell, further preferably a cylindrical lithium-ion battery cell, using the modular test system described above, comprising the steps of: assembling the modular test system using at least one calorimeter module; accommodating the battery cell in the modular test system, preferably in an enclosure formed by the thermal contact surfaces of the module; applying at least one heating and/or cooling profile to the battery cell via the at least one temperature control unit; and measuring heat flux and/or temperature data via the at least one heat flux sensor unit and/or optionally at least one temperature sensor.

The technical advantages achieved with the test method of the present invention correspond to those achieved with the modular test system described above. Aspects, features and advantages described in the context of the inventive modular test system are also applicable to the inventive test method, and vice versa.

The inventive test method using the inventive test system allows the precise testing of battery cells in a controlled environment that may accurately mimic a real-life environment of the tested battery cell in a battery module/pack.

Preferably, the test method further comprises the step of adjusting the at least one heating and/or cooling profile based on the measured heat flux and/or temperature data. This allows to set up a temperature management profile of the tested battery cell that adheres to required safety conditions, whilst simultaneously optimizing the efficiency of the operation of the battery cell under investigation.

Further preferably, the test method comprises the steps of applying at least one charging and/or discharging profile to the battery cell; and optionally adjusting the charging and/or discharging profile based om the measured heat flux and/or temperature data. This allows to further optimize the operation profile of the battery cell under investigation.

The above and further features and advantages of the present invention will become more readily apparent from the following detailed description of preferred embodiments of the invention with reference to the accompanying drawings, in which:
- Fig. 1: is a schematic cross-section of a modular test system with four modules according to a preferred embodiment of the present invention;
- Fig. 2: is a schematic cross-section of another modular test system with four modules according to a preferred embodiment of the present invention;
- Fig. 3: is a cutaway drawing of a modular test system according to a preferred embodiment of the invention.

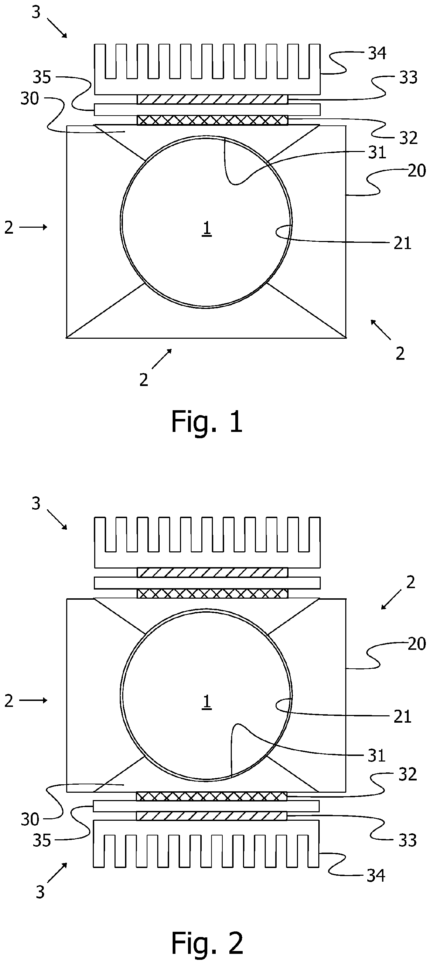

Fig. 1 depicts a schematic cross-section of a modular test system with four modules according to a preferred embodiment of the present invention. The modular test system described herein is configured to perform calorimetric measurements on a battery cell. In the preferred embodiments described in the following, the battery cell to be tested is embodied by a cylindrical battery cell 1, which is seen in Fig. 1 as accommodated in the modular test system.

The modular test system of Fig. 1 comprises a total of four modules that are assembled to form an enclosure for the battery cell 1, partially enclosing the latter along its circumference. In the embodiment of Fig. 1, two types of modules are shown. The modular test system of Fig. 1 comprises three passive heat conduction modules 2, and one calorimeter module 3, which will be described in the following. For ease of legibility, detailed reference signs are only provided for one of the three passive heat conduction modules 2.

The three passive heat conduction modules 2 each comprise a passive heat conduction element 20 and a passive thermal contact surface 21. The passive heat conduction element comprises a thermal mass with a predetermined thermal resistance and/or heat capacity, so that heat can be conducted from and/or to the battery cell 1 during testing. The heat amount and rates to be conducted are determined by the above-mentioned thermal properties of the passive heat conduction element 20. Depending on the configuration of the passive heat conduction element 20, different (passive) environments of the tested battery cell 1 can be simulated.

The calorimeter module 3 comprises a calorimeter heat conduction element 30. Like the passive heat conduction element 20, it serves the purpose to effect a defined heat transfer to and/or from the battery cell 1 during testing. The heat conduction properties of the calorimeter heat conduction element 30 can be adjusted by choice of a proper material. The calorimeter heat conduction element 30 is in thermal contact with a heat flux sensor unit 32, which in turn is thermally connected to a temperature control unit 33 via a heat capacity element 35. The temperature control unit 33 is further thermally connected to a cooling element 34. The thermal contact between the respective elements is effected by a flat contact of the elements over a substantial percentage of their surface area.

The heat flux sensor unit 32 is configured to measure a heat flux between the battery cell 1 and the calorimeter module 3, that is transmitted through the calorimeter heat conduction element 30. It serves to collect heat flux data during testing of the battery cell 1. In preferred embodiments, the heat flux sensor unit 32 comprises a Peltier element or at least two temperature sensors arranged a predetermined distance from each other, in order to enable the measurement of a heat flux. Although not shown in Fig. 1, one of the temperature sensors may be arranged at a different location than that shown in Fig. 1 for the heat flux sensor unit 32. One temperature sensor may, for example, be located in or on the calorimeter thermal contact surface 31.

The temperature control unit 33 is configured to induce temperature changes in the calorimeter module 3. The temperature control unit 33 is an active element. It is configured to indirectly control the temperature of the thermal contact surface 31. This is achieved by varying the temperature of the temperature control unit 33 and transmit heat to or from the calorimeter thermal contact surface 31. In a preferred embodiment, the temperature control unit 33 may comprise a Peltier element as active temperature element.

The heat flux sensor unit 32 and the temperature control unit 33 are not in direct contact, but thermally coupled via the heat capacity element 35. The heat capacity element 35 provides a thermal contact between the heat flux sensor unit 32 and the temperature control unit 33 with predetermined thermal resistance and heat capacity. The cooling element 34 is provided to establish an improved heat conduction channel from the temperature control unit 33 to the environment of the modular test system.

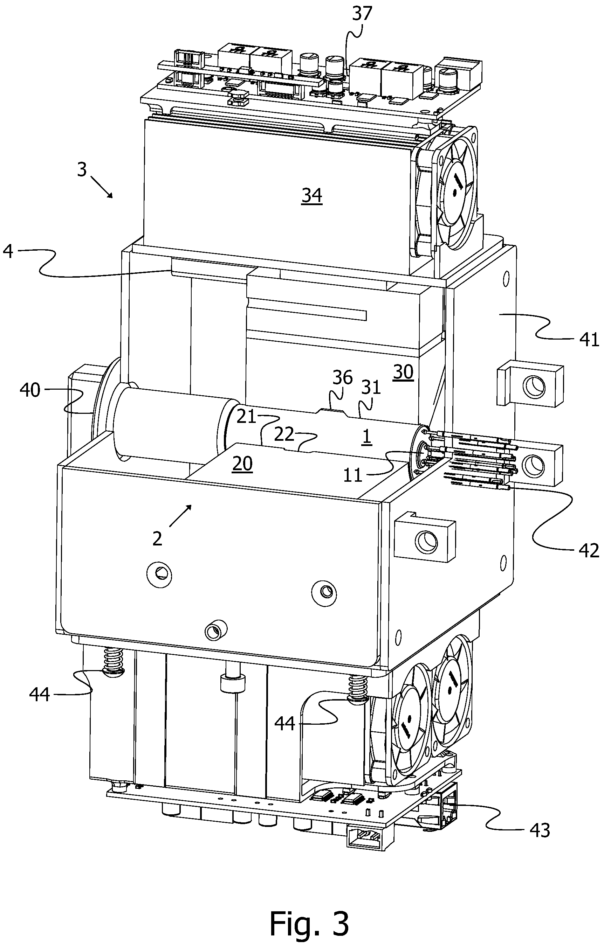

In order to provide a controlled test environment for the conduct of well-reproducible test measurements, the passive heat conduction modules 2 and the calorimeter module 3 comprise respective thermal contact surfaces 21, 31. The thermal contact surfaces 21, 31 are shaped to correspond to segments of the outer shape of the battery cell 1 under investigation. The modules are configured such that, when assembled to the modular test system, the plurality of thermal contact surfaces 21, 31 forms an enclosure for accommodation of the battery cell 1 that establishes a direct thermal contact between the modular test system and the battery cell 1, preferably over a substantial part of the surface of the battery cell 1. Since cylindrical battery cells are commonly arranged in battery modules or packs such that their longitudinal axes are parallel and they contact each other at their lateral faces (i.e. the surface on the circumference of the cylindrical battery cells), the modular test system is configured such that the thermal contact surfaces 21, 31 are suitable to establish a direct contact to the lateral face of the battery cell 1. Each thermal contact surface 21, 31 has a concave shape corresponding to a segment of a lateral face of a cylinder with a curvature corresponding to that of the battery cell 1 to be accommodated. As shown in Fig. 3, the thermal contact surfaces 21, 31 are dimensioned in the axial direction of the battery cell 1 such that the battery cell 1 is in contact with the thermal contact surfaces 21, 31 along more than 90% of the height of the battery cell 1.

The modules are configured such that the thermal contact surfaces 21, 31 in the assembled state of the modular test system form a hollow cylinder with a radius corresponding to that of the cylindrical battery cell 1. It is noted that Fig. 1 and 2 depict the assembled modular test system with a tiny gap between the battery cell 1 and the thermal contact surfaces 21, 31. Preferably, the form fit between the thermal contact surfaces 21, 31 and the battery cell 1 is as close as possible, to ensure an optimal thermal contact between the modules and the battery cell 1. Alternatively, or additionally, a pad with high thermal conductivity, e.g. a pad of silica, can be provided and positioned between the thermal contact surfaces 21, 31 and the battery cell 1, in order to establish a good thermal contact between the modules of the modular test system and the battery cell 1.

Fig. 1 shows a modular test system with one active module, i.e. the calorimeter module 3 on top. It is also possible to configure the modular test system with more than one active module, in order to enable the measurement of heat profiles on multiple sides of the battery cell 1, and in order to simulate a thermal environment with multiple active elements (which can be simulated by applying corresponding heat profiles via the temperature control units 33 to the battery cell 1). Such a system is shown in Fig. 2. It comprises two passive modules 2, and two active modules 3 on opposite sides of the battery cell 1. The configuration of the modules 2, 3 corresponds to that of the modules in Fig. 1, so that the description is not repeated here.

Fig. 1 and 2 show a modular test system with four modules. This configuration is particularly suitable to simulate a scenario in which the battery cell 1 is arranged in a square lattice of battery cells. Each module represents a direct neighbor of the battery cell 1 in the square lattice and can be mimicked by appropriate configuration of the respective module (e.g., by varying the thermal properties of the heat conduction element 20, 30). If it is preferred to simulate a real-life scenario in which the battery cell is arranged in a hexagonal lattice, a modular test system with six modules may be preferable, which form a hexagonal housing for the battery cell 1. The modular test systems shown in Fig. 1 and 2 are readily modified to such a system with six modules by the person skilled in the art.

Fig. 3 shows a perspective cutaway view of a modular test system according to a preferred embodiment of the invention, with four modules. On the top, Fig. 3 shows a calorimeter module 3 in sectional view. To the left front of Fig. 2, a passive heat conduction module 2 in sectional view can be seen. Although only two modules 2, 3 are visible in the perspective cutaway view of Fig. 3, the embodiment of Fig. 3 comprises two more modules not directly visible in Fig. 3. It is evident to the skilled person that embodiments of the invention are not limited to a configuration with four modules, other numbers of modules (such as 2 or 6) may also be used.

A battery cell 1 is accommodated between the modules 2, 3, which enclose the battery cell 1 along its lateral face. The lateral face of the battery cell 1 is held and thermally contacted by direct contact to correspondingly shaped concave thermal contact surfaces 21, 31 of the modules 2, 3.

In the embodiment of Fig. 3, a (calorimeter) temperature sensor 36 is arranged in the calorimeter thermal contact surface 31. It enables the measurement of the part of the surface of the battery cell 1 in contact with the calorimeter module 3. Analogously, a (passive heat conduction) temperature sensor 22 is arranged in the passive thermal contact surface 21. It enables the measurement of the part of the surface of the battery cell 1 in contact with the passive heat conduction module 2.

In order to secure the relative arrangement of the modules 2, 3, the modular test system of Fig. 3 comprises a frame 4 to which the modules 2, 3 are mounted by suitable attachment means (which are configured as screws 44 in the embodiment of Fig. 3). Besides the modules 2, 3, a closing cap 40 and an electrical contacting plate 41 are attached to the frame 4. The closing cap 40 abuts against the bottom face of the battery cell 1 and limits its movement in a direction along its longitudinal axis. The electrical contacting plate 41 comprises electric connectors 42 for establishing an electrical connection to an electric terminal 11 of the battery cell 1, and to limit the movement of the battery cell 1 along its longitudinal axis. Both the closing cap 40 and the electrical contacting plate 41 may be configured as thermally insulating, so that the battery cell 1 in the modular test system is thermally insulated from the environment.

The modular test system further comprises a control unit 37 for controlling the operation of at least the calorimeter module 3. For ease of assembly, the control unit 37 may be provided in the calorimeter module 3. In the embodiment of Fig. 3, the control unit 37 is located on the cooling element 34 of the calorimeter module 3, so that it can also be cooled by the cooling element 34.

Preferably, all electronic components required to operate the modular test system (including control of the temperature control unit(s) 33, and acquisition and recording of data from the heat flux sensor unit(s) 32 and the temperature sensors 22, 36) are contained in the control unit 37. For ease of operability, the modular test system may be connectable to peripheral electronics such as data acquisition units or user interfaces. For this, the modular test system comprises an interface connector 43, which can act as user interface and/or data transfer interface to connect a user interface or a data acquisition unit. In preferred embodiments, all interfaces are combined into a LAN interface which acts as power supply and interface for the transmission of control data and measurement data.

In operation, the modular test system may be used to perform calorimetric tests on a battery cell 1 under realistic operation conditions. First, the modular test system is assembled from a plurality of modules 2, 3, which are chosen to reflect the thermal environment of the battery cell 1 to be simulated. For example, passive heat conduction modules 2 with different heat capacities and/or thermal resistance of the passive heat conduction elements 20 may be selected, in order to mimic different thermal environments on different sides of the battery cell 1. At least one active/calorimeter module 3 is assembled in the modular test system. The modules 2, 3 are assembled such that the respective thermal contact surfaces 21, 31 form an enclosure accommodating the battery cell 1 (preferably along its entire lateral face in the case of a cylindrical battery cell 1). The battery cell 1 is inserted in the modular test system, with the closing cap 40 and the electrical contacting plate 41 being mounted to hold the battery cell 1.

For the calorimetric tests, heating and/or cooling profiles may be applied to the battery cell 1 by means of the temperature control unit(s) 33 of the calorimeter module(s) 3 mounted in the modular cell system. The resulting heat flux can be measured via the heat flux sensor unit(s) 32 of the calorimeter module(s) 3.

During the tests, it is also possible to apply charging and/or discharging profiles to the battery cell 1 via the electrical contacting plate 41 which is connected to the electrical terminals 11 of the battery cell 1.

The test routines can also be performed in a feedback manner, such that heating and/or cooling profiles induced by the temperature control unit(s) 33, and/or charging and/or discharging profiles are modified or adjusted based on the measured heat flux and/or temperature data. If, for example, the heat flux and/or temperature data indicates an excessive heating of the battery cell 1 during a test run (optionally including a charging and/or discharging process of the battery cell 1), additional cooling may be employed to lower the temperature of the battery cell 1. In this way, charging and/or discharging profiles, as well as heating and/or cooling profiles can be adapted and optimized under consideration of the thermal environment of the battery cell 1 simulated by the modular test system.

Although not shown in the embodiments described above, the passive heat conduction modules 2 may also be equipped with a heat flux sensor unit, which is configured in the same manner as the heat flux sensor unit of the calorimeter modules 3. The control unit 37 of the modular test system is communicatively coupled to all temperature sensors 22, 36 and heat flux sensor units of the modular test system (wired or wireless), to acquire data from all sensors and sensor units during test performance.

### List of reference signs

- 1: battery cell
- 11: electric terminal

- 2: passive heat conduction module
- 20: passive heat conduction element
- 21: passive thermal contact surface
- 22: temperature sensor

- 3: calorimeter module
- 30: calorimeter heat conduction element
- 31: calorimeter thermal contact surface
- 32: heat flux sensor unit
- 33: temperature control unit
- 34: cooling element
- 35: heat capacity element
- 36: temperature sensor
- 37: control unit

- 4: frame
- 40: closing cap
- 41: electrical contacting plate
- 42: electric connectors
- 43: interface connector
- 44: screws

## Claims

1. Modular test system for a battery cell (1), preferably a cylindrical battery cell (1), further preferably a cylindrical lithium-ion battery cell (1), the test system being configured to be assembled from a plurality of modules to accommodate and at least partially enclose the battery cell (1), the modular test system comprising at least one calorimeter module (3) having
∘ a calorimeter thermal contact surface (31) for establishing a thermal contact to a part of a surface of the battery cell (1) when accommodated in the modular test system,
∘ a temperature control unit (33) for directly or indirectly controlling the temperature of the thermal contact surface (31), in order to apply a heating or cooling profile to the battery cell (1), and
∘ a heat flux sensor unit (32) for measuring a heat flux between the battery cell (1) and the calorimeter module (3).

2. Modular test system according to claim 1, comprising at least one passive heat conduction module (2) having
∘ a passive thermal contact surface (21) for establishing a thermal contact to a part of a surface of the battery cell (1) when accommodated in the modular test system, and
∘ a passive heat conduction element (20) with a predetermined thermal resistance and/or heat capacity for conducting heat from and/or to the battery cell (1) during testing.

3. Modular test system according to claim 1 or 2, wherein the at least one calorimeter thermal contact surface (31) and/or the at least one passive thermal contact surface (21) are curved and shaped to correspond to a segment of the lateral face of a cylinder with a diameter corresponding to that of the battery cell (1) to be accommodated in the modular test system.

4. Modular test system according to any of the preceding claims, particularly to claim 3, comprising 2, 4 or 6 modules (2, 3), preferably consisting of 2, 4 or 6 modules (2, 3), to enable the simulation of a linear, square or hexagonal arrangement of battery cells.

5. Modular test system according to any of the preceding claims, the at least one calorimeter module (3) comprising a temperature sensor (36) arranged in or on the calorimeter thermal contact surface (31) and configured to measure a temperature of the part of the surface of the battery cell (1) in contact with the calorimeter thermal contact surface (31) when accommodated in the modular test system.

6. Modular test system according any of claims 2 to 6, the at least one passive heat conduction module (2) comprising a temperature sensor (22) arranged in or on the passive thermal contact surface (21) and configured to measure a temperature of the part of the surface of the battery cell (1) in contact with the passive thermal contact surface (21) when accommodated in the modular test system.

7. Modular test system according to any of the preceding claims, wherein the at least one temperature control unit (33) comprises a Peltier element.

8. Modular test system according to any of the preceding claims, wherein the at least one heat flux sensor unit (32) comprises a Peltier element or two temperature sensors arranged at a predetermined distance from each other.

9. Modular test system according to any of the preceding claims, the at least one calorimeter module (3) comprising a control unit (37) configured to control the temperature control unit (33), to monitor heat flux data provided by the heat flux sensor unit (32), and optionally to monitor temperature data provided by the temperature sensor (36).

10. Modular test system according to any of the preceding claims, particularly to claim 9, comprising at least two calorimeter modules (3), wherein each calorimeter module (3) is configured to operate independently or in synchronization with the other calorimeter module(s) (3).

11. Modular test system according to any of the preceding claims, wherein the at least one temperature control unit (33) is configured to operate in an adiabatic mode such that the battery cell (1) is thermally insulated from the environment; or
wherein the at least one thermal control unit (33) is configured to operate in an isothermal mode such that the battery cell (1) is kept at a constant temperature.

12. Modular test system according to any of the preceding claims, comprising a frame (4) for mounting the modules (2, 3) such that the respective thermal contact surfaces (21, 31) form an enclosure for the battery cell (1), the modular test system optionally comprising a closing cap (40) for closing off the enclosure for the battery cell (1) at an axial end thereof, and/or electric connectors (42) for connecting to the electric terminals (43) of the battery cell (1).

13. Modular test system according to any of the preceding claims, comprising a user interface for inputting heating and cooling profiles, and for monitoring experimental data, preferably in real time.

14. Modular test system according to any of the preceding claims, comprising a data acquisition unit operatively connectable to the at least one calorimeter module (3) and/or optionally to the temperature sensor (22) of the at least one passive heat conduction module (2), the data acquisition unit being configured to collect temperature and heat flux data from at least one temperature sensor (22, 36) and/or at least one heat flux sensor unit (32) to determine at least one heat distribution profile of the surface of the battery cell (1).

15. Test method for a battery cell (1), preferably a cylindrical battery cell (1), further preferably a cylindrical lithium-ion battery cell (1), using the modular test system according to any of the preceding claims, comprising the steps of:
• assembling the modular test system using at least one calorimeter module (3);
• accommodating the battery cell (1) in the modular test system, preferably in an enclosure formed by the thermal contact surfaces (21, 31) of the module (2, 3);
• applying at least one heating and/or cooling profile to the battery cell (1) via the at least one temperature control unit (33);
• measuring heat flux and/or temperature data via the at least one heat flux sensor unit (32) and/or optionally at least one temperature sensor (22, 36).

16. Method according to claim 15, comprising the step of:
• adjusting the at least one heating and/or cooling profile based on the measured heat flux and/or temperature data.

17. Method according to claim 15 or 16, comprising the steps of:
• applying at least one charging and/or discharging profile to the battery cell (1); and
• optionally adjusting the charging and/or discharging profile based om the measured heat flux and/or temperature data.
